(19) Europäisches Patentamt
European Patent Office
Office européen des brevets

(11) Numéro de publication: **0 115 994**
**A1**

(12) **DEMANDE DE BREVET EUROPEEN**

(21) Numéro de dépôt: **84400196.6**

(22) Date de dépôt: **30.01.84**

(51) Int. Cl.³: **G 05 B 19/04**, G 05 B 9/03

(30) Priorité: **03.02.83 FR 8301672**

(43) Date de publication de la demande: **15.08.84 Bulletin 84/33**

(84) Etats contractants désignés: **BE DE FR GB IT NL**

(71) Demandeur: **JEUMONT-SCHNEIDER Société anonyme dite:, 31-32, Quai de Dion Bouton, F-92811 Puteaux Cedex (FR)**

(72) Inventeur: **Gabillet, Jean-François, 44, rue de l'Orée du Bois, F-60580 Coye la Foret (FR)**

(74) Mandataire: **Lejet, Christian, Société JEUMONT-SCHNEIDER 31-32, Quai de Dion Bouton, F-92811 Puteaux Cedex (FR)**

(54) **Interface pour relier un système informatique à un dispositif actionneur.**

(57) La présente invention concerne une interface d'un dispositif informatique.

Cette interface est caractérisée en ce qu'elle comprend un agencement d'éléments (C2, C2') susceptible de réaliser une fonction logique telle qu'une fonction ET, de dispositifs de contrôle (K1, K1') du fonctionnement de ces éléments (C2, C2'), dont la sortie est reliée au système de commande associé au système informatique (DI, DI'), et des moyens de contrôle (K2, K2') des dispositifs de contrôle (K1, K1'), le système de commande étant muni de moyens comparateurs de l'état des éléments (C2, C2') réalisant une fonction logique, signalé par les dispositifs de contrôle (K1, K1') et de l'état commandé, et, le cas échéant, de moyens inhibiteurs de l'émission d'un signal de commande dans le cas d'une non-correspondance entre les deux états comparés.

L'invention est utilisable dans le cas d'application où une interface de sécurité est exigée.

DES
DI
DS
R
CR
D
LT1
EK
ST
S1
C1
K2
R3
C2
K1
R1
R2
R1'
R2'
SK
SK'
K1'
TR
A
E1
G
E2
CR'
LT2
C2'
R'
D'
DS'
DES'
S1'
C1'
R3'
K2'
DI'
ST'
EK'
IF
IF1
IF2

EP 0 115 994 A1

La présente invention concerne une interface qui relie un dispositif informatique à un dispositif actionneur devant être alimenté en énergie électrique par l'intermédiaire d'un circuit d'alimentation dont la fermeture ou l'ouverture est commandée par le dispositif informatique.

Il est connu que par exemple dans les systèmes de commande des aiguillages des lignes de chemin de fer, on prévoit pour des raisons de sécurité que l'actionneur d'un aiguillage ne soit alimenté en énergie pour effectuer un changement d'état de l'aiguillage que lorsqu'un certain nombre de conditions sont remplies. Chaque condition est en général constituée par un état de fonctionnement d'un relais. Quand un relais est par exemple excité, il provoque la fermeture ou l'ouverture d'un contact monté dans le circuit d'alimentation d'un moteur électrique formant l'actionneur.

Ces systèmes basés sur l'utilisation de relais présentent un certain nombre d'inconvénients. Ainsi, il faut utiliser des relais de sécurité, c'est-à-dire des éléments à sécurité intrinsèque, pour être sûr du bon fonctionnement de ces éléments. Or de tels relais sont relativement coûteux. D'autre part, ces systèmes ne permettent pas ou seulement avec des moyens complexes d'éliminer le risque d'ordres intempestifs provoqués par exemple par un court-circuit à un endroit du circuit d'alimentation.

La présente invention a pour objectif de pallier ces inconvénients.

Pour atteindre ce but, l'interface selon la présente invention comprend un agencement d'éléments susceptibles de réaliser une fonction logique telle qu'une fonction ET, de dispositifs de contrôle du fonctionnement de ces éléments, dont la sortie est reliée au système de commande associé au dispositif informatique et des moyens de contrôle des dispositifs de contrôle , le système de commande étant muni de moyens comparateurs de l'état des éléments réalisant une fonction logique, signalé par les dispositifs de contrôle et de l'état commandé, et, le cas échéant, des moyens inhibiteurs de l'émission d'un signal de commande dans le cas d'une non-correspondance entre les deux états comparés.

Grâce à ces mesures les éléments susceptibles d'accomplir une fonction logique, peuvent être des éléments électriques ou électroniques habituels, qui n'ont pas besoin d'être de sécurité intrinsèque et qui sont peu coûteux, tout en garantissant la sécurité de l'interface.

Suivant une caractéristique avantageuse de l'invention, le circuit d'alimentation de l'actionneur, qui comporte deux lignes de transmission d'énergie de niveaux différents, comprend dans au moins une de ces lignes un élément susceptible d'effectuer une fonction ET, telle qu'un organe commutateur, assurant le transfert de l'énergie à l'actionneur à la réception d'un signal de commande produit par le système de commande, et en ce qu'un dispositif de contrôle de l'état de sortie de l'élément ET est associé à celui-ci.

Suivant une autre caractéristique avantageuse de l'invention, un élément susceptible d'effectuer une fonction logique est monté dans chaque ligne de transmission d'énergie du circuit d'alimentation de l'actionneur, chacun commandé par un propre dispositif de commande du système de commande, et un dispositif de contrôle est associé à chaque élément ET, muni chacun de moyens de contrôle de son fonctionnement et relié au dispositif de commande de l'élément auquel il est associé et/ou au dispositif de commande de l'autre élément.

Suivant une autre caractéristique avantageuse de l'invention, les deux lignes de transmission d'énergie du circuit d'alimentation de l'actionneur sont reliées, en aval du ou des éléments susceptibles d'effectuer une fonction logique ET, aux entrées de l'enroulement primaire d'un transformateur, tandis que l'actionneur est monté dans le circuit de l'enroulement secondaire de ce transformateur.

Suivant une autre caractéristique de l'invention, chaque dispositif de contrôle est monté dans un circuit de test permettant de créer des conditions à l'entrée du dispositif de contrôle, auxquelles ce dernier devrait produire un signal de sortie correspondant au signal représentatif de la présence d'un niveau d'énergie à la sortie de l'élément susceptible d'effectuer une fonction ET , qui est contrôlée.

Selon la présente invention, on peut utiliser un transformateur qui présente une courbe d'hystérésis sensiblement rectangulaire et dont l'enroulement primaire est agencé pour être parcouru par des courants de direction inversée en fonction des signaux de commande appliqués aux éléments susceptibles d'effectuer une fonction ET, montés dans les lignes de transmission d'énergie du circuit d'alimentation de l'actionneur, de telle sorte qu'il n'y ait pas de transmission d'énergie au circuit secondaire du transformateur dans le cas d'un potentiel permanent sur au moins une des lignes de la transmission d'énergie.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention, et dans lesquels :

- la figure 1 montre le schéma électrique d'un premier mode de réalisation d'une interface selon la présente invention;

- la figure 2 montre le schéma électrique d'un deuxième mode de réalisation de l'interface selon la présente invention, et

- la figure 3 illustre une modification à apporter au mode de réalisation suivant la figure 1.

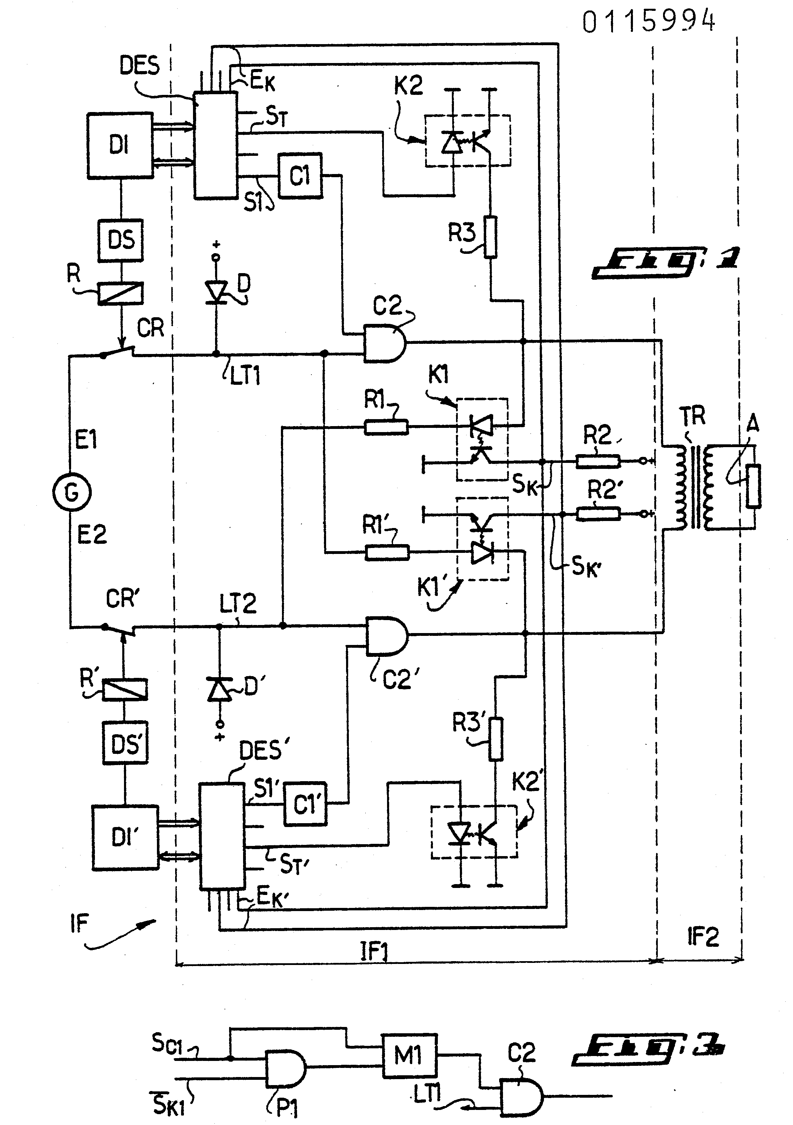

La figure 1 montre un premier mode de réalisation d'une interface suivant la présente invention. Dans l'exemple représenté on reconnaît en DI, DI' deux dispositifs informatiques et un actionneur A qui est alimenté en énergie électrique par un générateur G produisant deux niveaux d'énergie différents E1, E2 dont chacun est transmis à l'actionneur A par une ligne de transmission LT1, LT2. L'interface est identifiée par la référence IF. Selon la présente invention, cette interface se compose de deux parties, une partie IF1 formant une partie d'interface de sécurité contrôlée et une partie IF2 de sécurité intrinsèque.

L'interface comprend pour chaque dispositif informatique DI, DI' un dispositif entrée/sortie DES, DES' comprenant des moyens tels que des moyens codeurs, décodeurs et registres de sortie. Chaque dispositif DES, DES' comporte un certain nombre de sorties $S_i$. Sur la figure 1, une seule sortie S1, S1'est utilisée pour la commande du circuit d'alimentation de l'actionneur A. Bien entendu, d'autres sorties pourraient permettre de commander des circuits d'alimentation d'autres actionneurs. Les sorties S1, S1' sont reliées respectivement à un organe de commande C1, C1' qui agit sur un organe commutateur C2, C2' monté dans le circuit d'alimentation en énergie de l'actionneur, c'est-à-dire dans la ligne de transmission d'énergie LT1 ou LT2. Chacun de ces deux organes de commutation C2, C2' assure le transfert de l'énergie électrique à l'actionneur A en réponse à un signal de commande provenant de l'organe de commande C1, C1'. On constate que les organes commutateurs C2, C2' accomplissent des fonctions logiques ET. Ils sont avantageusement constitués par des composantes électroniques tels que par exemple des transistors ou d'autres éléments ou dispositifs semi-conducteurs.

En aval des organes de commutation C2, C2', les lignes de transmission d'énergie LT1, LT2 sont reliées aux entrées de l'enroulement primaire d'un transformateur TR. L'actionneur A est disposé dans le circuit de l'enroulement secondaire de ce transformateur.

Pour assurer un contrôle du fonctionnement des organes de commutation C2, C2', un organe de contrôle K1, K1' est interposé entre la sortie d'un organe de commutation C2, C2' et l'entrée recevant la ligne de transmission d'énergie LT1,LT2 de l'autre organe de commutation C2', C2. La sortie $S_K$, $S_K$' de chaque organe de contrôle K1, K1' est reliée à une entrée de contrôle $E_K$, $E_K$' des deux dispositifs DES, DES'. Les organes de contrôle K1, K1' peuvent être de toute nature appropriée.Dans l'exemple représenté, ils sont constitués par des photocoupleurs dont le circuit d'entrée pourvu d'une résistance R1, R1' est monté entre les deux lignes de transmission d'énergie LT1, LT2, tandis que le circuit de sortie comporte une résistance R2, R2' et est monté entre la masse et un potentiel positif.

L'interface suivant la présente invention comporte en outre des organes de contrôle K2, K2' destinés à contrôler respectivement le fonctionnement exact des organes de contrôle K1, K1'. L'entrée de chacun d'eux est reliée à une sortie de test $S_T$, $S_T$' du dispositif DES, DES' associé, tandis que le circuit de sortie pourvu d'une résistance R3, R3' est relié au point de jonction de la sortie d'un organe de commutation C2, C2' et de l'organe de contrôle correspondant K1, K1'. Pour compléter le circuit de test de chaque organe de contrôle K1, K1', le point de jonction du circuit d'entrée de chaque organe K1, K1' et de la ligne de transmission LT1, LT2 correspondante est relié par une diode D, D' à un potentiel positif.

En plus des mesures de sécurité qui viennent d'être décrites, on prévoit dans le cadre de l'invention pour chaque dispositif informatique DI, DI' un dispositif de sécurité globale DS, DS'. Ces dispositifs appelés"chiens de garde" agissent sur des relais R, R' qui pourraient être des relais de sécurité intrinsèque pour assurer l'ouverture des contacts de relais CR, CR' montés dans les lignes de transmission d'énergie LT1, LT2, en réponse à un signal de commande produit par le dispositif informatique DI, DI' correspondant.

Le système qui est représenté à la figure 1 et qui vient d'être décrit fonctionne de la manière suivante: on constate que l'actionneur A , par exemple un moteur électrique ne peut être alimenté en énergie que lorsqu' un niveau d'énergie est présent à chacune des entrées de l'enroulement primaire du transformateur TR et si les niveaux d'énergie sont différents. Pour que de l'énergie puisse venir aux entrées du transformateur, il faut que les deux organes de commutation C2, C2' soient passants en même temps, c'est-à-dire reçoivent simultanément à leur entrée de commande un signal provenant du dispositif DES, DES' correspondant , à travers le circuit de commande C1, C1'. En d'autres termes, un ordre ne peut parvenir à l'actionneur que si trois conditions sont remplies simultanément (deux niveaux d'énergie; niveaux différents; deux signaux de commande). Mais , pour qu'il y ait sécurité il faut empêcher que l'une ou plusieurs de ces conditions puissent être satisfaites de façon intempestive.

Le transformateur TR constitue une première mesure pour protéger l'actionneur contre un tel risque .

En général, plusieurs actionneurs , chacun pourvu d'un circuit d'alimentation à organes de commutation du type C2 , C2' seront commandés à partir d'un même dispositif DES. Il pourrait alors se produire en aval de l'organe de de commutation un court-circuit entre les lignes de transmission de différents circuits d'alimentation. La présence régulière d'un niveau d'énergie sur l'une des lignes de transmission imposerait un niveau d'énergie à d'autres lignes, mais cette fois-ci de façon intempestive. D'autre part, il y a toujours le risque qu'une ligne de transmission d'énergie soit intempestivement mise à la terre. Dans ces circonstances , de l'énergie pourrait déjà être présente à une entrée d'un actionneur, de façon intempestive, et il suffirait alors que de l'énergie soit appliquée à l'autre entrée, cette fois-ci régulièrement à la suite d'un signal de commande envoyé à l'organe de commutation C2, C2' associé, pour que l'actionneur soit excité. Autrement dit l'actionneur sera alors mis en marche déjà à la suite d'une commande d'un seul des deux dispositifs informatiques, au lieu des deux à la fois comme le prévoit le concept du système.

Or, ce risque d'alimentation intempestive d'un actionneur A, qui vient d'être décrit, est éliminé en prévoyant une séparation galvanique de chaque actionneur, c'est-à-dire en plaçant chacun des actionneurs dans le circuit secondaire d'un transformateur TR, comme cela est illustré à la figure 1. Avec un tel agencement, l'actionneur ne peut pas être excité intempestivement par un cour-circuitage ou une mise à la masse d'une de ses entrées. Il faut toujours que les trois conditions de sécurité susmentionnées, instaurées dans l'interface, soient préalablement remplies. Même une mise à la masse simultanée des deux entrées de l'actionneur pourrait au pire entraîner une mise hors service de l'actionneur, ce qui cependant n'est pas considéré comme une atteinte à la sécurité. De plus, l'actionneur ne pourrait être excité que si de l'énergie de niveaux différents est présente simultanément aux deux entrées de l'enroulement primaire du transformateur TR. En raison de toutes ces explications qui viennent d'être faites, on peut considérer le transformateur comme constituant dans l'interface selon la présente invention un organe de sécurité intrinsèque.

Les organes de contrôle K1 et K1' permettent de détecter à tout instant et séparément la présence intempestive d'un niveau d'énergie en aval des organes de commutation C2, C2'. Une telle présence mettrait en défaut le système de sécurité . En effet dans le cas de la présence intempestive et par exemple permanente d'un niveau d'énergie à la sortie d'un des organes du commutateur C2, C2', l'actionneur A serait alimenté en énergie par la seule commande de l'autre organe commutateur C2',C2 , c'est-à-dire à partir d'un seul dispositif informatique.

Comme il ressort de la figure 1, le contrôle séparé de chaque partie en aval des organes commutateurs du circuit d'alimentation est assuré par un agencement croisé des organes contrôleurs K1, K1'. Si par exemple un niveau d'énergie apparaît à la sortie de l'organe commutateur C2, l'organe de contrôle K1 constitué par un photocoupleur provoquerait aux bornes d'entrée de celui-ci une différence d'énergie, ce qui provoquera l'excitation du photocoupleur. Celui-ci produira à sa sortie $S_K$ un signal de sortie spécifique qui sera transmis à chacun des deux dispositifs informatiques DI, DI', plus précisément à leur dispositif entrée/sortie DES, DES'. Le dispositif informatique DI pourrait déterminer si l'état de sortie "1" représentatif de la présence d'un niveau d'énergie est intempestif ou justifié par un signal de commande qu'il avait transmis à l'organe commutateur C2. Dans l'autre dispositif informatique DI', le signal de sortie provenant de l'organe de contrôle K1 permettra d'éviter l'envoi d'un signal de commande à l'organe commutateur C2' tant qu'un niveau d'énergie intempestive demeure en aval de l'organe commutateur C2.

Or les organes de contrôle K1, K1' pourraient être défectueux eux-mêmes. Ce qui constituerait une atteinte à la sécurité du système, serait un défaut des organes de contrôle qui les empêcheraient de passer de l'état "zéro" à l'état "1", c'est-à-dire de produire un signal de sortie même dans le cas d'une différence d'énergie entre leurs bornes d'entrée. Dans un tel cas, un niveau d'énergie pourrait être présent à la sortie d'un organe commutateur sans que l'organe de contrôle puisse signaler ce fait aux dispositifs informatiques et notamment au dispositif informatique associé à l'autre organe commutateur. Rien n'empêcherait alors ce dernier dispositif informatique d'envoyer un signal de commande à son organe commutateur, malgré la présence intempestive d'un niveau d'énergie à la sortie de l'organe commutateur cité en premier lieu. Il en résulterait une alimentation en énergie intempestive de l'actionneur A par la commande à partir d'un seul dispositif informatique.

Les organes de contrôle K2, K2' ont pour fonction d'éliminer ce risque. A cette fin, les organes K2, K2' qui , dans l'exemple représenté sont constitués par des photocoupleurs, sont agencés de façon à permettre de tester à tout moment les organes de contrôle K1, K1'. Dans ce but, l'interface de sécurité selon la présente invention prévoit pour chaque organe de contrôle K1,K1' un circuit de courant continu de test . Si l'organe K1 doit être testé, le dispositif DES produira à sa sortie $S_T$ un signal de test qui rendra conducteur le circuit de sortie du photocoupleur K2 et assurera l'écoulement d'un courant continu dans le circuit d'entrée de l'organe de contrôle ou photocoupleur K1 à travers la diode D'. Si l'organe de contrôle fonctionne correctement, il changera d'état ce qui donnera lieu à la transmission d'un signal de sortie approprié aux dispositifs informatiques.

Il est à noter que dans l'exemple de réalisation qui vient d'être décrit et qui est représenté, les signaux de test sont constitués par du courant continu pour que ces signaux ne risquent pas d'influencer le fonctionnement du système, c'est-à-dire provoquer une excitation intempestive de l'actionneur. Bien entendu, les signaux de test peuvent être de toute nature appropriée s'ils permettent de satisfaire à ces exigences.

La présente invention prévoit en plus des mesures de sécurité qui viennent d'être énoncées, la possibilité d'une coupure générale de l'énergie, si par exemple un défaut a déjà été constaté et s'il y a un risque d'un deuxième défaut. C'est à cette fin que l'on a prévu des relais de sécurité R, R'. Bien entendu un seul relais pourrait également accomplir cette fonction. Etant donné qu'il s'agit d'un relais ou de deux relais, ils peuvent être de sécurité et ainsi coûteux, sans que cela rende onéreux l'ensemble du système.

Ce ou ces relais pouvant être commun à l'installation quel que soit le nombre d'actionneurs.

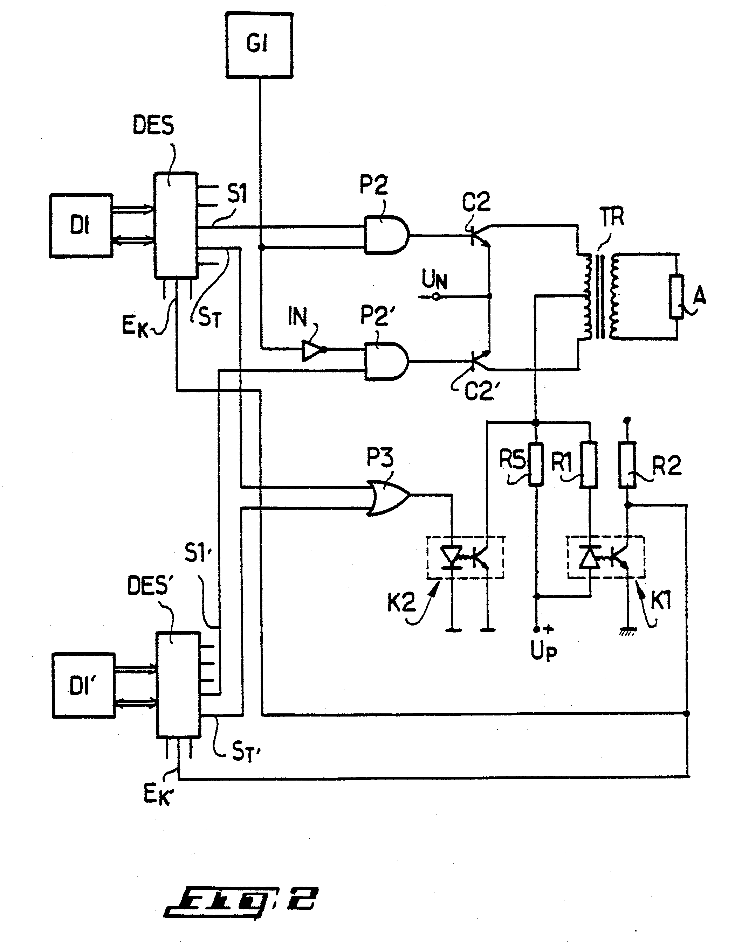

On constate que l'interface suivant la figure 1 est réalisé en logique programmée. Mais le même principe de structure peut être utilisé pour une interface en logique câblée. Dans ce cas, on interposera entre l'organe de commande C1 et l'organe commutateur C2 le montage illustré à la figure 3, comprenant une porte ET P1 à deux entrées recevant respectivement le signal de commande $S_{C1}$ en provenance de l'organe de commande C1 et le signal $S_{K1}$ de l'organe de contrôle K1 et un organe de mémorisation M1.

Si l'organe K1 produit un signal de sortie "0" représentatif d'un niveau "0" à la sortie de l'organe commutateur C2 à contrôler, la porte P1 laisse passer les signaux de commande provenant de l'organe C1 pour provoquer la commutation de C2. Pour assurer que malgré le changement d'état de l'organe commutateur C2 qui bloquera la porte P1, le signal de l'organe C1 parvienne toujours à l'organe C2, on prévoit l'organe M1 qui a pour fonction de maintenir sa sortie à l'état "1" tant que l'organe de commande C1 envoie un signal de commande.

La figure 2 montre un deuxième mode de réalisation d'une interface selon l'invention. Ce mode de réalisation est fondé sur l'utilisation d'un transformateur ayant une courbe d'hystérésis rectangulaire.

A la figure 2, les éléments qui correspondent à des éléments déjà présents dans le mode de réalisation suivant la figure 1, portent les mêmes références. L'actionneur A est disposé comme avant dans le circuit secondaire d'un transformateur TR. Mais, le point milieu de l'enroulement primaire est maintenant relié à un potentiel positif $U_P$ par l'intermédiaire d'une résistance R5. Chacune des deux entrées de l'enroulement primaire est reliée à la sortie d'un organe commutateur C2, C2' formé avantageusement par un transistor dans ce mode de réalisation. Les émetteurs des deux transistors sont mis à un potentiel négatif $U_N$. La base de chaque transistor C2, C2' est commandée par un dispositif DES, DES' par l'intermédiaire d'une porte ET P2 , P2' à deux entrées respectivement reliées à la sortie S1, S1' du dispositif DES ou DES' et à la sortie d'un générateur d'impulsions GI. Concernant la porte P2', on constate qu'un inverseur IN est interposé entre l'entrée correspondante de la porte et le générateur. Dans ce mode de réalisation un seul dispositif de contrôle K1 est suffisant pour connaître l'état des sorties des organes commutateurs C2, C2'. Le dispositif de contrôle peut être de toute nature appropriée. Dans l'exemple représenté à la figure 2, il est constitué par un photocoupleur présentant la structure déjà décrite à l'occasion de la figure 1 et dont le circuit d'entrée est monté sur la résistance R5. La sortie $S_K$ de ce photocoupleur est reliée à chacun des deux dispositifs DES,DES', à savoir à une borne d'entrée EK, EK'. Au dispositif de contrôle K1 est associé un dispositif de test K2 comme dans le cas de la figure 1, qui a pour fonction de contrôler le fonctionnement du dispositif de contrôle K1. Le circuit d'entrée du dispositif de test comprend une porte OU P3 à deux entrées reliées respectivement aux sorties de test $S_T$ , $S_T'$ des deux dispositifs DES, DES'.

L'interface suivant la figure 2 fonctionne de la manière suivante :

On constate que chaque transistor C2, C2' est conducteur lorsque sa porte d'entrée P2, P2' est passante à la suite de la présence simultanée à ses entrées d'une impulsion positive en provenance du générateur GI et d'un signal de commande transmis par le dispositif DES, DES' associé . Etant donné que les impulsions produites par le générateur GI, avant de parvenir au transistor C2', subissent une inversion de polarité en passant par l'inverseur IN, le transistor C2' est ouvert lorsque le transistor C2 est fermé et inversement. Par conséquent les deux moitiés de l'enroulement primaire du transformateur TR sont parcourues successivement et dans des directions opposées par un courant s'écoulant du potentiel positif $U_P$ vers le potentiel négatif $P_N$ au rythme déterminé par les impulsions de sortie du générateur GI. Ceci permet une alimentation en énergie de l'actionneur A.

Si l'un des deux transistors C2, C2' est fermé parce que son dispositif DES n'a pas envoyé un signal de commande ou est constamment ouvert, de façon intempestive, à la suite d'un défaut, il n'y a pas de courant s'écoulant à travers la moitié d'enroulement correspondant où celle-ci est parcourue en permanence par un courant continu. En raison de la courbe d'hystérésis rectangulaire du transformateur TR, ce dernier reste ainsi insensible à de tels états et ne provoque pas l'alimentation en énergie de l'actionneur A. Comme l'état de défaut est caractérisé par l'écoulement d'un courant dans la moitié d'enroulement primaire correspondant et ainsi à travers la résistance R5, il sera détecté par le dispositif de contrôle K1 qui le signalera aux deux dispositifs DES, DES'. Ceci permet d'éviter l'envoi d'un signal de commande dans de telles circonstances à l'autre commutateur, et ainsi tout risque d'une alimentation intempestive de l'actionneur A par des phénomènes parasites. Comme dans le premier mode de réalisation, pour tester le dispositif de contrôle K1, soit l'un soit l'autre des dispositifs DES,DES' envoie un signal de test approprié. Dans l'exemple représenté on applique à la borne libre de la résistance R5 un potentiel négatif par rapport au potentiel $U_P$, ce qui provoquera l'état "1" à la sortie du dispositif de contrôle K1. On pourrait aussi envisager dans une variante, de déconnecter le dispositif K1 de la résistance R5 de toute manière appropriée connue, pendant la durée du test. Il serait possible aussi de choisir un signal de test différent du courant de fonctionnement du système, auquel ce dernier est insensible. Une autre méthode très simple pour vérifier le fonctionnement du dispositif de contrôle K1 lorsque l'on a l'état "1" en permanence à la sortie de ce dispositif consiste à faire passer à "0", par exemple pendant quelques millisecondes ou même microsecondes, la sortie de l'un des dispositifs DES, DES' et à lire aussitôt l'information qui vient en retour du dispositif de contrôle K1. Etant donné que les organes dans le dispositif actionneur A ont des temps de réponse relativement longs, il sera insensible à une telle brève interruption.

On constate que dans le deuxième mode de réalisation les trois conditions indiquées lors de la description du premier mode de réalisation doivent à nouveau être satisfaites simultanément: il faut deux niveaux d'énergie $U_P$, $U_N$; les deux niveaux doivent être différents; il faut la présence simultanée de deux signaux de commande produits par les dispositifs DES, DES'.

Bien entendu, de nombreuses modifications peuvent être apportées aux modes de réalisation qui viennent d'être décrits. Il est possible de rendre les interfaces plus complexes par incorporation d'autres organes susceptibles d'effectuer une fonction logique, auxquels il faudrait alors associer des dispositifs de contrôle, le cas échéant complétés par des moyens permettant de vérifier le fonctionnement correct de ces dispositifs. Dans le cas du premier mode de réalisation, on pourrait couper l'interface représentée à la figure 1 en deux parties, c'est-à-dire ne prévoir qu'un seul organe commutateur dans une ligne de transmission d'énergie. Dans le concept du deuxième mode de réalisation on pourrait réaliser l'interface non pas en logique programmée, mais en logique câblée par exemple de façon analogue aux moyens représentés à la figure 3. D'autre part, les différents dispositifs et éléments peuvent être constitués par d'autres moyens en mesure d'accomplir la fonction indiquée.

Dans tous les cas un dispositif d'adaptation de la tension de sortie tel qu'un dispositif de filtrage ou de redressement peut être intercalé entre le transformateur TR et l'actionneur A.

Il est encore à noter que dans les deux modes de réalisation représentés aux figures 1 et 2, les organes de contrôle K1 et K1' peuvent être dédoublés afin que les signaux émis vers les dispositifs informatiques soient isolés entre eux. Cette mesure permettrait de limiter les risques d'interaction d'un dispositif informatique sur l'autre.

# REVENDICATIONS

1. Interface adaptée pour relier un système informatique à un dispositif actionneur devant être alimenté en énergie électrique par l'intermédiaire d'un circuit d'alimentation dont la fermeture ou l'ouverture est commandée par le dispositif informatique, caractérisée en ce qu'il comprend un agencement d'éléments (C2, C2') susceptible de réaliser une fonction logique telle qu'une fonction ET, de dispositifs de contrôle(K1, K1') du fonctionnement de ces éléments(C2, C2'), dont la sortie est reliée au système de commande associé au système informatique (DI, DI'), et des moyens de contrôle (K2, K2') des dispositifs de contrôle(K1, K1'), le système de commande étant muni de moyens comparateurs de l'état des éléments(C2, C2') réalisant une fonction logique, signalé par les dispositifs de contrôle(K1, K1') et de l'état commandé, et , le cas échéant, de moyens inhibiteurs de l'émission d'un signal de commande dans le cas d'une non-correspondance entre les deux états comparés.

2. Interface selon la revendication 1, caractérisée en ce qu'au moins un élément(C2)susceptible d'effectuer une fonction logique ET, tel qu'un organe commutateur commandé, est monté dans le circuit d'alimentation de l'actionneur(A), auquel est associé un dispositif de contrôle(K1) complété par des moyens de contrôle (K2) de son fonctionnement.

3. Interface selon la revendication 2, caractérisée en ce qu'au moins un élément (C2, C2') susceptible d'effectuer une fonction logique ET est monté dans chacune des deux lignes de transmission d'énergie de niveaux différents(LT1, LT2) du circuit d'alimentation de l'actionneur(A), chacun commandé par un dispositif de commande, et en ce que le dispositif de contrôle(K1, K1')associé à chaque élément (C2, C2') est relié au dispositif de commande de l'élément(C2, C2')auquel il est associé et/ou au dispositif de commande de l'autre élément(C2', C2).

4. Interface selon l'une des revendications 2 ou 3, caractérisée en ce que les deux lignes de transmission d'énergie(LT1, LT2) du circuit d'alimentation de l'actionneur(A) sont reliées en aval des éléments (C2, C2') susceptibles d'effectuer une fonction logique ET, aux entrées de l'enroulement primaire d'un transformateur (TR), l'actionneur étant monté dans le circuit de l'enroulement secondaire de ce dernier.

5. Interface selon l'une des revendications précédentes, caractérisée en ce que chaque dispositif de contrôle(K1, K2) est formé par un organe sensible notamment à l'état "1" à la sortie de l'élément ET(C2, C2') auquel il est associé.

6. Interface selon la revendication 5, caractérisée en ce que le dispositif de contrôle(K1, K1') est monté entre la ligne de transmission (LT1, LT2) en aval de l'élément ET,(C2, C2') à contrôler et à un niveau d'énergie de référence pouvant être l'autre ligne de transmission d'énergie (TR2, TR1), le cas échéant, en amont de l'élément ET (C2', C2) monté dans cette ligne de transmission.

7. Interface selon l'une des revendications précédentes, caractérisée en ce que chaque dispositif de contrôle(K1, K1') est monté dans un circuit de test permettant de créer des conditions à l'entrée du dispositif de contrôle auxquelles ce dernier devrait produire un signal de sortie correspondant au signal représentatif de la présence d'un niveau d'énergie à la sortie de l'élément ET (C2, C2') qui est contrôlé.

8. Interface selon la revendication 7, caractérisée en ce que le circuit de test comporte un élément de commutation(K2, K2') susceptible d'être commandé par le dispositif de commande correspondant du dispositif informatique(DI, DI') pour fermer ou ouvrir le circuit de test précité.

9. Interface selon l'une des revendications précédentes, caractérisée en ce qu'elle comprend un transformateur (T R) qui présente une courbe d'hystérésis sensiblement rectangulaire et dont l'enroulement primaire est agencé pour être parcouru par des courants de direction inversée en fonction de signaux appliqués aux éléments (C2, C2') susceptibles d'effectuer une fonction ET, telle que des organes de commutation commandés, qui sont montés dans les lignes d'énergie du circuit d'alimentation de l'actionneur (A), de telle sorte qu'il n'y ait pas de transmission d'énergie au circuit secondaire du transformateur (TR) dans lequel est monté l'actionneur (A), dans le cas d'un potentiel permanent sur au moins une des lignes de transmission d'énergie en aval de l'élément ET.

10. Interface selon la revendication 9, caractérisée en ce que chaque élément ET formé avantageusement par un organe commutateur (C2, C2') est commandé par une porte ET à deux entrées recevant respectivement un signal de commande d'un dispositif informatique (DI, DI') et des impulsions d'horloge de commande, les impulsions commandant un élément ET étant décalées en phase de 180° par rapport aux impulsions destinées à l'autre élément ET.

11. Interface selon l'une des revendications 9 ou 10, caractérisée en ce que le point milieu de l'enroulement primaire du transformateur (TR) est relié à un premier potentiel d'énergie électrique ($U_P$), tandis que chaque entrée de cet enroulement est susceptible d'être relié par l'intermédiaire d'un des éléments ET (C2, C2') à un deuxième potentiel d'énergie électrique ($U_N$) d'un niveau différent.

12. Interface selon la revendication 11, caractérisé en ce qu'un dispositif de contrôle (K1) constitué par un détecteur de courant est monté dans le circuit entre le premier potentiel ($U_P$) et le point milieu du transformateur (TR), la sortie ($S_K$) du dispositif de contrôle étant reliée aux deux dispositifs informatiques (DI, DI').

13. Interface selon la revendication 12, caractérisée en ce que les moyens de contrôle (K2) du dispositif de contrôle (K1) sont formés par un générateur d'un courant de test dans ledit circuit relié au point milieu du transformateur(TR).

14. Interface selon la revendication 12, caractérisée en ce que les moyens de contrôle K2 sont formés par un moyen d'interruption de l'envoi d'un signal de commande à un élément ET(C2, C2') pendant une durée de temps relativement court par rapport au temps de réponse de l'actionneur(A).

15. Interface selon l'une des revendications précédentes, caractérisée en ce que les dispositifs de contrôle(K1, K1')et, le cas échéant, les moyens de contrôle (K2,K2') sont formés par des photocoupleurs.

16. Interface selon l'une des revendications précédentes , caractérisée en ce que les éléments(C2, C2')susceptibles d'effectuer une fonction ET sont formés par des organes de commutation de toute nature appropriée, avantageusement des organes semi-conducteurs , tels que des transistors ou analogues.

17. Interface selon l'une des revendications précédentes, caractérisée en ce que dans une interface en logique câblée , en amont de chaque élément (C2, C2') susceptible d'effectuer une fonction logique , est prévu un dispositif logique comprenant une porte ET (P1) à deux entrées recevant respectivement le signal de commande et le complément du signal de sortie du dispositif de contrôle(K1, K2')et un élément mémoire(M1) de toute nature appropriée qui est monté entre la porte(P1) et l'élément ET(C2, C2') et destiné à maintenir sa sortie à l'état "1" après une excitation par la porte(P1)pendant la présence du signal de commande.

0115994

DES
EK
ST
K2
DI
C1
S1
DS
R3
R
D
+
CR
C2
LT1
K1
R1
E1
TR
R2
A
G
SK
R2'
E2
R1'
SK'
K1'
CR'
LT2
R'
C2'
D'
R3'
DS'
+
DES'
S1'
C1'
K2'
DI'
ST'
EK'
IF
IF1
IF2
FIG: 1
SC1
M1
C2
P1
LT1
SK1
FIG: 3

0115994

GI
DES
DI
S1
P2
C2
TR
UN
A
EK
ST
IN
P2'
C2'
P3
R5
R1
R2
K2
K1
UP
S1'
DES'
DI'
ST'
EK'

Fig. 2

Office européen des brevets

**RAPPORT DE RECHERCHE EUROPEENNE**

0115994

Numéro de la demande

EP 84 40 0196

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-2 850 832 (MBB)<br>* En entier *<br>--- | 1 | G 05 B 19/04<br>G 05 B 9/03 |
| A | DE-B-2 651 314 (SIEMENS)<br>* En entier *<br>--- | 1 | |
| A | DE-B-2 932 270 (STANDARD ELECTRIC)<br>* En entier *<br>----- | 1 | |
| | | | **DOMAINES TECHNIQUES RECHERCHES (Int. Cl. 3)** |
| | | | G 05 B<br>G 06 F<br>G 08 B<br>H 05 K |

Le présent rapport de recherche a été établi pour toutes les revendications

| Lieu de la recherche | Date d'achèvement de la recherche | Examinateur |
|---|---|---|
| LA HAYE | 10-05-1984 | RESSENAAR J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82